# EUROPEAN PATENT APPLICATION

(11) **EP 4 485 031 A1**
(43) Date of publication of application: **01.01.2025**
(21) Application number: 24183563.6
(22) Date of filing: 20.06.2024
(51) Int. Cl.: G02B 6/44

(54) **OPTICAL FIBER CABLE WITH ONE OR MORE ANTI-SHRINKAGE MEMBERS**

(30) Priority: 26.06.2023 IN 202311042533
(71) Applicant: Sterlite Technologies Limited, Gurugram, Haryana 122102 (IN)
(72) Inventor: KUMAR, Sarin, 122102 Gurugram (IN); SAHA, Swarnava, 122102 Gurugram (IN)
(74) Representative: Valet Patent Services Limited

(57) **Abstract**

Disclosed is an optical fiber cable (100, 200, 300, 400) having a cable core (102) having one or more optical fibers (108), a sheath (104) surrounding the cable core (102), and a one or more anti-shrinkage members (106) embedded in the sheath (104). Each anti-shrinkage member has a length that is substantially equal to a length of the optical fiber cable (100, 200, 300). Further, the anti-shrinkage member has a diameter that is less than 300 micrometres (µm) and does not carry any communication signal.

## Description

### TECHNICAL FIELD

Embodiments of the present disclosure relate to the field of optical telecommunication systems, and more particularly, relates to an optical fiber cable with one or more anti-shrinkage members.

This application claims the benefit of Indian Application No. "202311042533" titled "OPTICAL FIBER CABLE WITH ONE OR MORE ANTI-SHRINKAGE MEMBERS" filed by the applicant on June 26, 2023, which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information

Optical fiber cables having one or more optical fibers are widely used to transmit information or data in the form of light from one place to another. The optical fiber cables generally have a sheath to reduce abrasion and to provide the optical fiber cable with extra protection against external mechanical effects such as crushing. Generally, the sheath is made up of an extruded thermoplastic material that has intrinsic post shrinkage property with time. However, as the optical fiber within the optical fiber cable does not shrink the same amount, the optical fiber comes out of the optical fiber cable. Moreover, high material shrinkage may cause excessive fiber protrusion that can lead to an attenuation increase, cable fixing, and sealing weakening and in worst cases fiber breakage. Traditionally, embedded strength members are provided in the optical fiber cable to prevent the sheath material post shrinkage.

Prior art US10386593B2 reference discloses about strength members made of metal, glass yarns that are embedded in the jacket/sheath, along with signal carrying active optical fibers. Another prior art CN109507777A discloses glass granules embedded in the jacket/sheath to protect from birds.

Yet another prior art US4156104A discloses about signals carrying active optical fibers that are embedded in the jacket/sheath and a central strength member.

Yet another prior art EP1420278A2 discloses about short length glass fibers mixing in the sheath material.

However, there are a number of drawbacks of these conventional optical fiber cables, in the above stated prior arts. In light of the above stated discussion, to overcome the above stated disadvantages there is a need for an optical fiber cable that is capable of solving aforementioned problems of the conventional optical fiber cables.

Thus, the present disclosure proposes a technical solution that overcomes the above-stated limitations in the prior arts by providing an optical fiber cable with one or more anti-shrinkage members.

### SUMMARY OF THE DISCLOSURE

Embodiments of the present disclosure relates to an optical fiber cable comprising a cable core having one or more optical fibers, a sheath that surrounds the cable core and one or more anti-shrinkage members embedded in the sheath. In particular,
(i) each anti-shrinkage member of the one or more anti-shrinkage members (106) has a length that is substantially equal to a length of the optical fiber cable (100, 200, 300),
(ii) each anti-shrinkage member of the one or more anti-shrinkage members (106) has a diameter that is less than 300 micrometres (µm), and
(iii) where the one or more anti-shrinkage members (106) do not carry any communication signal.

According to the first aspect of the present disclosure, the core comprises a loose tube such that the loose tube has one or more optical fibers that carry one or more communication signals.

According to the second aspect of the present disclosure, the loose tube is filled with a thixotropic gel to block water ingression.

According to the third aspect of the present disclosure, the one or more anti-shrinkage members has 1 to 14 anti-shrinkage members. Further, each anti-shrinkage member of the one or more anti-shrinkage members is an optical fiber that has at least one of, a fiber core, a cladding, and a primary layer,
(ii) a glass core, a cladding, a primary layer, and a secondary layer
(iii) a glass core, a cladding, a primary layer, and a color layer, and
(iv) a glass core, a cladding, a primary layer, a secondary layer, and a color layer.

According to the fourth aspect of the present disclosure, an outer diameter (OD) of the optical fiber cable is less than 5 millimetres (mm).

According to the fifth aspect of the present disclosure, a fiber protrusion in the optical fiber cable is less than 50 millimetres (mm) in 20 meters (m) length of the optical fiber cable.

According to the sixth aspect of the present disclosure, each anti-shrinkage member of the one or more anti-shrinkage members has an optical loss of greater than 0.4 Decibel/Kilometre (dB/km) at a wavelength of 1310 nanometres (nm).

According to the seventh aspect of the present disclosure, the one or more anti-shrinkage members are embedded in a plurality of pitch circles.

According to the eighth aspect of the present disclosure, a diameter of one or more anti-shrinkage members of the one or more anti-shrinkage members is in a range of 180 µm to 260 µm.

According to the ninth aspect of the present disclosure, the sheath has a thickness in a range of 0.3 millimetres (mm) to 0.5mm.

According to the tenth aspect of the present disclosure, wherein the one or more anti-shrinkage members acts as a strength member such that the sheath is free from any other strength members made up of a material selected from, Aramid Reinforced Plastic (ARP), Fiber Reinforced Plastic (FRP), metal, or a combination thereof.

The foregoing objectives of the present disclosure are attained by providing a tool for insertion of a plurality of fiber connectors simultaneously and a method thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a cross sectional view of an optical fiber cable in accordance with an embodiment of the present disclosure;
Fig. 2 is a pictorial snapshot illustrating a cross sectional view of another optical fiber cable in accordance with an embodiment of the present disclosure;
Fig. 3 is a pictorial snapshot illustrating a cross sectional view of yet another optical fiber cable in accordance with an embodiment of the present disclosure.

The optical fiber cable illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

The term "optical fiber" as used herein refers to a light guide that provides highspeed data transmission. The optical fiber has one or more glass core regions and a glass cladding region. The light moving through the glass core regions of the optical fiber relies upon the principle of total internal reflection. The glass core regions have a higher refractive index (n1) than the refractive index (n2) of the glass cladding region of the optical fiber.

The term "optical fiber cable" as used herein refers to a cable that encloses a plurality of optical fibers.

The term "anti-shrinkage member" as used herein refers to an element embedded in sheath which helps in restraining a shrinkage of a sheath of an optical fiber cable due to temperature variation over time.

The term "mechanical optical fibers" as used herein refers to an optical fiber that do not carry any communication signal and being used for their mechanical properties.

The term "Pitch Circle Diameter (PCD)" as used herein refers to a diameter of that circle that passes through a centre of all the anti-shrinkage members embedded in the sheath.

The term "fiber protrusion" as used herein refers to an optical fiber inside a cable core which protrudes out of an end of an installed optical fiber cable.

The term "fiber core" as used herein refers to an inner most cylindrical structure present in the centre of an optical fiber, that is configured to guide the light rays inside the optical fiber.

The term "cladding" as used herein refers to one or more layered structure covering the core of an optical fiber from the outside, that is configured to possess a lower refractive index than the refractive index of the fiber core to facilitate total internal reflection of light rays inside the optical fiber.

The term "cable core" as used herein refers to a space inside a sheath of an optical fiber cable that has all signal carrying optical fibers.

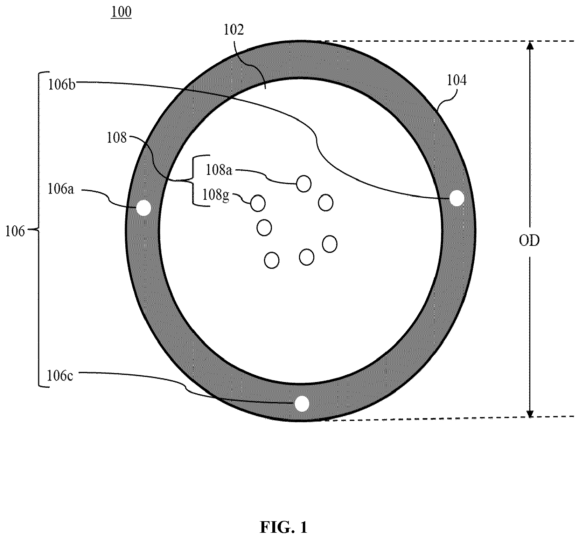

Fig. 1 is a pictorial snapshot illustrating a cross sectional view of an optical fiber cable in accordance with an embodiment of the present disclosure. The optical fiber cable 100 may be a cost effective and a low diameter optical fiber cable having optimized stiffness. In particular, the optical fiber cable 100 may have an outer diameter OD that may be less than 5 millimetres (mm) and is manufactured in a way to control a shrinkage of the optical fiber cable 100.

The optical fiber cable 100 may include a cable core 102, a sheath 104, and one or more anti-shrinkage members 106. In particular, the cable core 102 may have one or more optical fibers 108 of which first through seventh optical fibers 108a-108g are shown. Moreover, the first through seventh optical fibers 108a-108g may be disposed inside the cable core 102 along a length of the cable core 102. Such that, the first through seventh optical fibers 108a-108g may be adapted to enable a transmission of information by way of one or more optical signals and/or communication signals. Further, the one or more optical fibers 108 (*i.e*., the first through seventh optical fibers 108a-108g) may be, but not limited to, a single mode optical fiber, a multimode optical fiber, a single core optical fiber, a multicore optical fiber, and the like. Aspects of the present disclosure are intended to include and/or otherwise cover any type of the optical fiber of the one or more optical fibers 108 known to a person of ordinary skill in the art, without deviating from the scope of the present disclosure.

Although Fig. 1 illustrates that the one or more optical fibers 108 has seven optical fibers (*i.e.*, the first through seventh optical fibers 108a-108g), it will be apparent to a person skilled in the art that the scope of the present disclosure is not limited to it. In alternate aspects, the one or more optical fibers 108 may have any number of optical fibers, without deviating from the scope of the present disclosure. In such a scenario, each optical fiber may be adapted to perform one or more operations in a manner similar to the operations of the first through seventh optical fibers 108a-108g as described above.

In accordance with an embodiment of the present invention, the sheath 104 may surround the cable core 102. In particular, the sheath 104 may surround the plurality of optical fibers 108 (*i.e.,* the first through seventh optical fibers 108a-108g) that are disposed inside the cable core 102. Moreover, the sheath 104 may be adapted to reduce abrasion and to provide the optical fiber cable 100 with extra protection against one or more external mechanical effects. Further, the sheath 104 may be made up of a material such as, but not limited to, polyethylene (PE), Low-Smoke Zero-Halogen (LSZH), Polyvinyl chloride (PVC), Thermoplastic polyurethane (TPU), and the like. Aspects of the present disclosure are intended to include and/or otherwise cover any type of the material for the sheath 104 known to a person of ordinary skill in the art, without deviating from the scope of the present disclosure.

Furthermore, the sheath 104 may have one or more anti-shrinkage members 106 of which first through third anti-shrinkage members 106a-106c are shown. Particularly, the one or more anti-shrinkage members 106 (*i.e.,* the first through third anti-shrinkage members 106a-106c) may be embedded as strength members inside the sheath 104 to provide tensile strength and to facilitate in reduction of a shrinkage of the sheath 106. Moreover, the optical fiber cable 100 may have only the one or more anti-shrinkage members 106 that may act as the strength members for the optical fiber cable 100 and no other type of strength members (*e.g*., Aramid Reinforced Plastic (ARP), Fiber Reinforced Plastic (FRP), metal, and the like) may be utilized in the optical fiber cable 100. In other words, the sheath 104 may be free from any other strength members made up of a material such as, the ARP, the FRP, metal, and the like.

In accordance with an embodiment of the present invention, each anti-shrinkage member of the one or more anti-shrinkage members 106 may have a length that may be substantially equal to a length of the optical fiber cable 100. In particular, each of the first through third anti-shrinkage members 106a-106c may have a length that may be substantially equal to the length of the optical fiber cable 100. Moreover, each anti-shrinkage member of the one or more anti-shrinkage members 106 may have a diameter that may be less than 300 micrometres (µm). Further, the first through third anti-shrinkage members 106a-106c may have the diameter that may be less than 300 µm.

The diameter of the first through third anti-shrinkage members 106a-106c may be kept below 300 µm to easily embed the the first through third anti-shrinkage members 106a-106c inside a lower thickness sheath *e.g.,* the sheath 104 having a thickness in a range of 0.3 millimetres (mm) to 0.5mm that is specifically designed for a smaller sized optical fiber cable (*e.g.,* the optical fiber cable 100). Although FIG. 1 illustrates that the one or more anti-shrinkage members 106 has three anti-shrinkage members (*i.e.,* the first through third anti-shrinkage members 106a-106c), it will be apparent to a person skilled in the art that the scope of the present disclosure is not limited to it.

In accordance with an embodiment of the present invention, the one or more anti-shrinkage members 106 may have 1 to 14 anti-shrinkage members. In particular, each anti-shrinkage member is adapted to perform one or more operations in a manner similar to the operations of the first through third anti-shrinkage members 106a-106c as described above. Moreover, the one or more anti-shrinkage members 106 may have 1 to 14 anti-shrinkage members such that sufficient strength and anti-shrinkage property can be achieved while at the same time keeping the optical fiber cable 100 flexible.

Further, each anti-shrinkage member of the one or more anti-shrinkage members 106 may have an optical loss that may be greater than 0.4 Decibel/Kilometre (dB/km) at a wavelength of 1310 nanometres (nm). Specifically, the first through third anti-shrinkage members 106a-106c may have an optical loss that may be greater than 0.4 dB/km at a wavelength of 1310 nm.

In accordance with an embodiment of the present invention, one or more anti-shrinkage members of the one or more anti-shrinkage members 106 may have a diameter in a range of 180 µm to 260 µm.

In one exemplary scenario, the first and second anti-shrinkage members 106a and 106b may have the diameter in the range of 180 µm to 260 µm.

In another exemplary scenario, the first through third anti-shrinkage members 106a-106c may have the diameter in the range of 180 µm to 260 µm.

In accordance with an embodiment of the present invention, each anti-shrinkage member of the one or more anti-shrinkage members 106 may be a mechanical optical fiber (*i.e.,* an optical fiber that is not fit to carry any communication signal). In particular, each anti-shrinkage member of the one or more anti-shrinkage members 106 may be a mechanical optical fiber (*i.e.,* an optical fiber that is not fit to carry any communication signal) having a fiber core, a cladding, and a primary layer.

In an alternate aspect of the present disclosure, each anti-shrinkage member of the one or more anti-shrinkage members 106 may be a mechanical optical fiber (*i.e.,* an optical fiber that is not fit to carry any communication signal) having a fiber core, a cladding, a primary layer, and a secondary layer.

In yet alternate aspect of the present disclosure, each anti-shrinkage member of the one or more anti-shrinkage members 106 may be a mechanical optical fiber (*i.e.,* an optical fiber that is not fit to carry any communication signal) having a fiber core, a cladding, a primary layer, and a colour layer.

In yet alternate aspect of the present disclosure, each anti-shrinkage member of the one or more anti-shrinkage members 106 may be a mechanical optical fiber (*i.e.,* an optical fiber that is not fit to carry any communication signal) having a fiber core, a cladding, a primary layer, a secondary layer, and a colour layer. Aspects of the present disclosure are intended to include and/or otherwise cover a mechanical optical fiber (*i.e.,* an optical fiber that is not fit to carry any communication signal) with any combination of layers known to a person of ordinary skill in the art, without deviating from the scope of the present disclosure.

In accordance with an embodiment of the present invention, each anti-shrinkage member of the one or more anti-shrinkage members 106 being a mechanical optical fiber, may have larger optical loss as compared to an optical loss of the one or more optical fibers 108 disposed inside the cable core 102 of the optical fiber cable 100. Alternatively, each anti-shrinkage member of the one or more anti-shrinkage members 106 may be, but not limited to, a scrapped optical fiber, an optically damaged optical fiber, and the like. Aspects of the present disclosure may be intended to include and/or otherwise cover any type of the optical fiber as an anti-shrinkage member of the one or more anti-shrinkage members 106, without deviating from the scope of the present disclosure. As the one or more anti-shrinkage members 106 may be, but not limited to, a scrapped optical fiber, an optically damaged optical fiber, and the like, the optical fiber cable 100 may be a cost-effective optical fiber cable.

In accordance with an embodiment of the present invention, the optical fiber cable 100 has a fiber protrusion of less than 50 millimetres (mm) in 20 meters (m) length of the optical fiber cable 100. In particular, for testing the fiber protrusion, a method is described and categorised in IEC TR 62959 standard. The reason for fiber protrusion is a polymer post-shrinkage of a buffer layer (not shown) and the sheath 104 of the optical fiber cable 100. Further, the shrinkage of the polymer decreases the length of the optical fiber cable 100 but the length of the one or more optical fibers 108 does not decrease and thus, the one or more optical fibers 108 comes out of an end of the optical fiber cable 100.

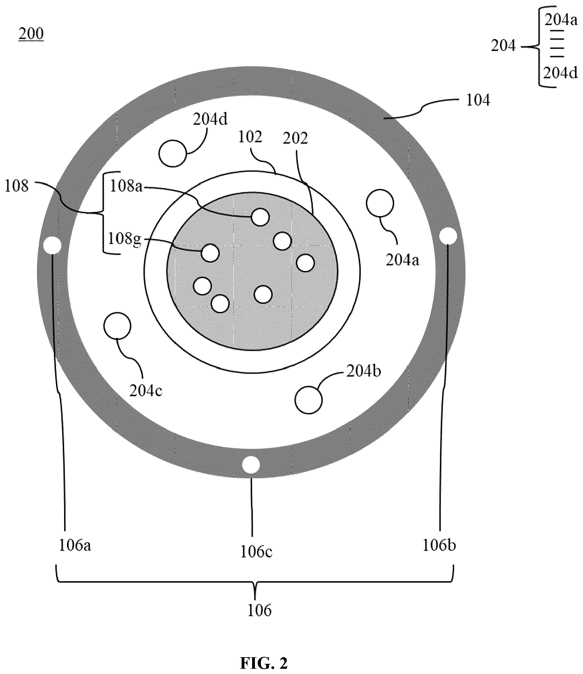

Fig. 2 is a pictorial snapshot illustrating a cross sectional view of another optical fiber cable in accordance with an embodiment of the present disclosure.

The optical fiber cable 200 may be substantially similar to the optical fiber cable 100 of FIG. 1 with elements referenced with reference numerals. However, the cable core 102 of the optical fiber cable 200 has a loose tube 202 such that the one or more optical fibers 108 that are adapted to carry one or more communication signals are disposed within the loose tube 202.

In particular, the optical fiber cable 200 has one or more strength members 204 of which first through fourth strength members 204a-204d are shown. Moreover, the one or more strength members 204 that are positioned in between the sheath 104 and the loose tube 202. Further, the one or more strength members 204 may be made up of a material such as, but not limited to, aramid yarns, glass roving yarns, and the like. Aspects of the present disclosure are intended to include and/or otherwise cover any type of the material of the one or more strength members 204, known to a person of ordinary skill in the art, without deviating from the scope of the present disclosure.

In some aspects of the present disclosure, the one or more strength members 204 may be wrapped helically and then positioned in between the sheath 104 and the loose tube 202. In alternate aspects of the present disclosure, the one or more strength members 204 may be put straight in between the sheath 104 and the loose tube 202.

In accordance with an embodiment of the present invention, the optical fiber cable 200 may further have the sheath 104 and the one or more anti-shrinkage members 106 (i.e., the first through third anti-shrinkage members 106a-106c). In particular, the loose tube 202 may be filled with a thixotropic gel. Moreover, the loose tube 202 may be filled with the thixotropic gel to block water ingression in the one or more optical fibers 108 disposed inside the loose tube 202. Further, to block water ingression in the optical fiber cable 100, the sheath 104 may enclose at least one of, but not limited to, the thixotropic gel, a water swellable yarn, a water blocking tape, and the like.

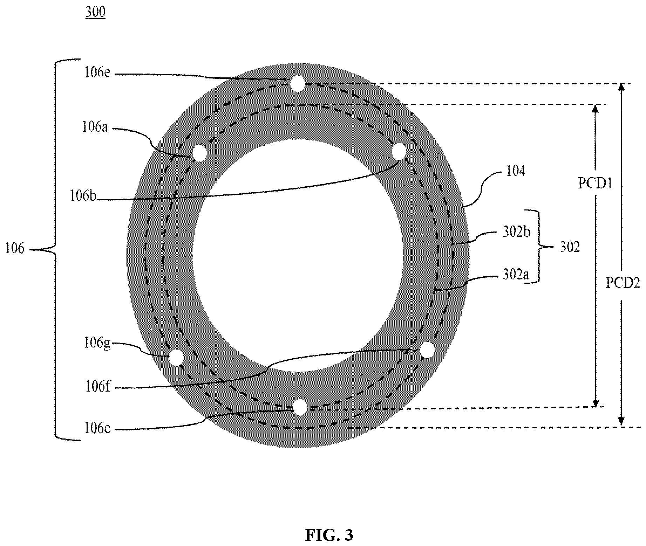

Fig. 3 is a pictorial snapshot illustrating a cross sectional view of yet another optical fiber cable in accordance with an embodiment of the present disclosure, The optical fiber cable 300 may be substantially similar to the optical fiber cable 100 of FIG. 1 with like elements referenced with like reference numerals. However, the one or more anti-shrinkage members 106 of which first through sixth anti-shrinkage members 106a-106f are shown, may be embedded in a plurality of pitch circles 302 inside the sheath 104.

In particular, the plurality of pitch circles 302 may have first and second pitch circles 302a and 302b such that the one or more anti-shrinkage members 106 are embedded in the first and second pitch circles 302a-302b. Moreover, the first pitch circle 302a may have a first Pitch Circle Diameter (PCD1) and the second pitch circle 302b may have a second Pitch Circle Diameter (PCD2) such that the first Pitch Circle Diameter (PCD1) is smaller than the second Pitch Circle Diameter (PCD2). Further, the first through third anti-shrinkage members 106a-106c may be embedded along the first pitch circle 302a and the fourth through sixth anti-shrinkage members 106d-106f may be embedded along the second pitch circle 302b.

Although FIG. 3 illustrates that the one or more anti-shrinkage members 106 has six anti-shrinkage members (*i.e.,* the first through sixth anti-shrinkage members 106a-106f), it will be apparent to a person skilled in the art that the scope of the present disclosure is not limited to it. In some aspects of the present disclosure, the one or more anti-shrinkage members 106 may have 2 to 14 anti-shrinkage members. In such a scenario, each anti-shrinkage member is adapted to perform one or more operations in a manner similar to the operations of the first through third anti-shrinkage members 106a-106f as described above. Further, Although FIG. 3 illustrates that the plurality of pitch circles 302 has two pitch circles (*i.e.,* the first and second pitch circles 302a and 32b), it will be apparent to a person skilled in the art that the scope of the present disclosure is not limited to it. In some aspects of the present disclosure, the plurality of pitch circles 302 may have any number of pitch circles to accommodate the one or more anti-shrinkage members 106.

Advantageously, the optical fiber cables 100, 200, and 300 are cost effective with low diameter optical fiber cables that have optimized stiffness. The optical fiber cable 100, 200, and 300 are manufactured in a way to control a shrinkage of the optical fiber cable 100. The optical fiber cable 100, 200, and 300 utilizes the one or more anti-shrinkage members 106 (*i.e.,* a mechanical optical fiber (such as a scrapped optical fiber, an optically damaged optical fiber, and the like) that does not carry any communication signal) embedded in the sheath 104 such that the acts as strength members to provide adequate strength to the optical fiber cables 100, 200, and 300, thus reducing wastage to a great extent.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100, 200, 300) comprising:
a cable core (102) having one or more optical fibers (108);
a sheath (104) that surrounds the cable core (102); and
one or more anti-shrinkage members (106) embedded in the sheath (104),
wherein
(i) each anti-shrinkage member of the one or more anti-shrinkage members (106) has a length that is substantially equal to a length of the optical fiber cable (100, 200, 300),
(ii) each anti-shrinkage member of the one or more anti-shrinkage members (106) has a diameter that is less than 300 micrometres (µm), and
(iii) where the one or more anti-shrinkage members (106) do not carry any communication signal.

2. The optical fiber cable (100, 200, 300) of claim 1, wherein the core (102) comprising a loose tube (202) such that the loose tube (202) has the one or more optical fibers (108) that carry one or more communication signals.

3. The optical fiber cable (100, 200, 300) of claim 2, wherein the loose tube (202) is filled with a thixotropic gel to block water ingression.

4. The optical fiber cable (100, 200, 300) of claim 1, wherein the one or more anti-shrinkage members (106) has 1 to 14 anti-shrinkage members.

5. The optical fiber cable (100, 200, 300) of claim 1, wherein each anti-shrinkage member of the one or more anti-shrinkage members (106) is an optical fiber that has at least one of, a fiber core, a cladding, and a primary layer,

6. The optical fiber cable (100, 200, 300) of claim 1, wherein each anti-shrinkage member of the one or more anti-shrinkage members (106) is an optical fiber that has at least one of, a glass core, a cladding, a primary layer, and a secondary layer,

7. The optical fiber cable (100, 200, 300) of claim 1, wherein each anti-shrinkage member of the one or more anti-shrinkage members (106) is an optical fiber that has at least one of, a glass core, a cladding, a primary layer, and a color layer.

8. The optical fiber cable (100, 200, 300) of claim 1, wherein each anti-shrinkage member of the one or more anti-shrinkage members (106) is an optical fiber that has at least one of, a glass core, a cladding, a primary layer, a secondary layer, and a color layer.

9. The optical fiber cable (100, 200, 300) of claim 1, wherein an outer diameter (OD) of the optical fiber cable (100, 200, 300) is less than 5 millimetres (mm).

10. The optical fiber cable (100, 200, 300) of claim 1, wherein a fiber protrusion in the optical fiber cable (100, 200, 300) is less than 50 millimetres (mm) in 20 meters (m) length of the optical fiber cable 100.

11. The optical fiber cable (100, 200, 300) of claim 1, wherein each anti-shrinkage member of the one or more anti-shrinkage members (106) has an optical loss of greater than 0.4 Decibel/Kilometre (dB/km) at a wavelength of 1310 nanometres (nm).

12. The optical fiber cable (100, 200, 300) of claim 1, wherein the one or more anti-shrinkage members (106) are embedded in a plurality of pitch circles (302).

13. The optical fiber cable (100, 200, 300) of claim 1, wherein a diameter of one or more anti-shrinkage members of the one or more anti-shrinkage members (106) is in a range of 180 µm to 260 µm.

14. The optical fiber cable (100, 200, 300) of claim 1, wherein the sheath (104) has a thickness in a range of 0.3 millimetres (mm) to 0.5mm.

15. The optical fiber cable (100, 200, 300) of claim 1, wherein the one or more anti-shrinkage members (106) acts as a strength member such that the sheath (104) is free from any other strength members made up of a material selected from, Aramid Reinforced Plastic (ARP), Fiber Reinforced Plastic (FRP), metal, or a combination thereof.
